# EUROPEAN PATENT SPECIFICATION

(11) **EP 3 197 865 B1**
(45) Date of publication and mention of the grant of the patent: **18.11.2026**
(21) Application number: 15775556.2
(22) Date of filing: 24.09.2015
(51) Int. Cl.: C08G 18/22, C08G 18/28, C08G 18/36, C08G 18/79, C08G 18/83, C09D 175/04, C11D 3/37, D06M 15/19, C08G 18/08, D06M 15/576, D06M 15/564

(54) **SULFONATED FLUORINATED, NON-FLUORINATED OR PARTIALLY FLUORINATED URETHANES**
SULFONIERTE, FLUORIERTE, NICHT-FLUORIERTE ODER TEILWEISE FUORIERTE URETHANE
URÉTHANES SULFONÉS FLUORÉS, NON FLUORÉS OU PARTIELLEMENT FLUORÉS

(30) Priority: 26.09.2014 US 201462055953 P
(43) Date of publication of application: 02.08.2017
(73) Proprietor: The Chemours Company FC, LLC, Wilmington, DE 19801 (US)
(72) Inventor: SWOREN, John Christopher, Lincoln University, Pennsylvania 19317 (US); BROWN, Gerald Oronde, Wilmington, Delaware 19803 (US); HAIDZINSKAYA, Tatsiana, Newark, Delaware 19713 (US)
(74) Representative: Dehns
(86) International application number: PCT/US2015/051880
(87) International publication number: WO 2016/049282

(56) References cited:
- WO-A1-2004/016584
- WO-A1-2004/067499
- WO-A1-93/01349
- US-A- 3 872 058
- US-A1- 2007 244 289
- US-B1- 6 313 335

## Description

### FIELD OF INVENTION

This invention relates to a method of preparing a sulfonated urethane compound that is the reaction product of a bisulfate source with a fluorinated, non-fluorinated, or partially fluorinated urethane compound.

### BACKGROUND OF THE INVENTION

Various compositions are known to be useful as treating agents to provide water repellency or stain release to textile substrates. Many such treating agents are fluorinated polymers and copolymers, or non-fluorinated polymers and copolymers. Non-fluorinated compounds are predominately polyacrylate-based or urethane-based copolymers.

Fluorinated and non-fluorinated surfactants are known to be useful as additives to aqueous systems including architectural coatings for reducing surface tension and/or providing cleanability.

Fluorinated copolymers provide good repellency to water and oil. Various attempts have been made to produce a non-fluorinated water repellent. Non-fluorinated copolymers are known to provide water repellency and optionally stain release to textiles, but are less effective than the fluorinated counterparts.

McBride, in U.S. Patent No. 5,117,041, discloses sulfonated allyl end-capped propylene terephthalate polyester oligomers useful for forming soil release agents for ethylene terephthalate fibers and fabrics.

Gresham, in US Patent No. 3,872,058, discloses fluorinated polyurethanes, useful as stain repellents for textiles. WO 2004/067499 A1 as well as WO 2004/016584 A1 disclose fluorine containing urethane derivatives suitable for the surface treatment textile products.

### SUMMARY OF INVENTION

The need exists for compounds with improved stain release or surfactant properties in the textile and coatings markets. The present invention meets these needs.

The present invention relates to a method of preparing a compound as defined by claim 1.

In another embodiment, the present invention is a method of reducing the surface tension of an aqueous medium comprising contacting the aqueous medium with the reaction product of the method as described herein.

The invention also relates to a method of providing a surface effect to a fibrous substrate comprising contacting a fibrous substrate with the reaction product of the method as described herein, wherein the surface effect is stain release.

### DETAILED DESCRIPTION OF INVENTION

Herein all trademarks are designated with capital letters.

The present invention relates to a method of preparing a compound as defined by claim 1.

The term "branched", as used herein, means that the functional chain can be branched at any point, for example as a quaternary substituted carbon, and can contain any number of branched substitutions.

Fluorinated alcohols may be used to improve stain release properties of the end product. In one embodiment, the isocyanate-reactive compound (b) is a fluorinated alcohol having Formula (I)

R_{f}-A-OH (I),

where R_{f} is a C₁ to C₂₀ perfluoroalkyl group optionally interrupted by CH₂, CH₂CH₂, SO₂N, CFH, S, or O; and A is a direct bond or a C₁ to C₆ alkylene group. R_{f} and A may be linear or branched. In one aspect, the fluorinated alcohol is a telomer-based alcohol, where R_{f} is a linear perfluoroalkyl group and A is CH₂CH₂. In one aspect, R_{f} is a C₂ to C₆ linear or branched perfluoroalkyl group. Specific examples of fluorinated alcohols include but are not limited to R_{f}OH, R_{f}CH₂CH₂OH, R_{f}SO₂NHCH₂CH₂OH, R_{f}CH₂CH₂SCH₂CH₂OH, R_{f}CH₂CH₂CF₂CF₂CH₂CH₂OH, R_{f}CH₂CH₂(CF₂CF₂CH₂CH₂)₂OH, R_{f}CH₂CF₂CH₂CH₂OH, R_{f}CH₂CF₂CH₂CF₂CH₂CH₂OH, R_{f}OCF₂CF₂CH₂CH₂OH, R_{f}CH₂OCH₂CH₂OH, R_{f}CHFCH₂CH₂OH, R_{f}CH₂O(CH₂)₆OH, (CF₃)₂CFCH₂CH₂OH, (CF₃)₂CFCH₂CH₂ CH₂OH, R_{f}CH₂CH₂SO₂NHCH₂CH₂OH, R_{f}CH₂CH₂SO₂N(CH₃)CH₂CH₂OH, R_{f}CH₂CH₂SO₂N(CH₂CH₃)CH₂CH₂OH, R-(CF(CF₃)CF₂O)_{y}CH₂OH, CF₂=CFOCF₂CF(CF₃)OCF₂CF₂CH₂OH, or R_{f}CH₂OC₂F₄CH₂OCH₂CH₂OH.

In another embodiment, the isocyanate-reactive compound (b) is a cyclic or acyclic sugar selected from Formulas (IIa), (IIb), or (IIc): 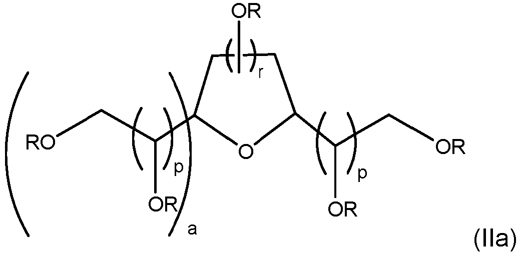 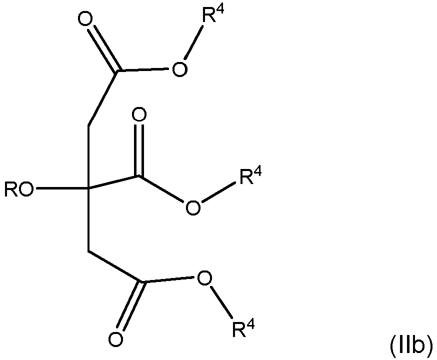 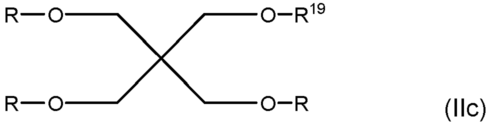
wherein each R is independently -H; -R¹; -C(O)R¹;
-(CH₂CH₂O)ₙ(CH(CH₃)CH₂O)ₘR²; or
-(CH₂CH₂O)ₙ(CH(CH₃)CH₂O)ₘC(O)R¹; each n is independently 0 to 20;
each m is independently 0 to 20; m+n is greater than 0; r is 1 to 3; a is 0 or 1; p is independently 0 to 2; provided that a is 0 when r is 3; each R¹ is independently a linear or branched alkyl group having 5 to 29 carbons optionally comprising at least 1 unsaturated bond; each R² is independently -H, or a linear or branched alkyl group having 6 to 30 carbons optionally comprising at least 1 unsaturated bond;
or mixtures thereof, provided when Formula (IIa) is chosen, then at least one R is -H and at least one R is a -R¹; -C(O)R¹;
-(CH₂CH₂O)ₙ(CH(CH₃)CH₂O)ₘR²; or
-(CH₂CH₂O)ₙ(CH(CH₃)CH₂O)ₘC(O)R¹; each R⁴ is independently -H, a linear or branched alkyl group having 6 to 30 carbons optionally comprising at least 1 unsaturated bond, or combinations thereof; -(CH₂CH₂O)ₙ(CH(CH₃)CH₂O)ₘR²; or
-(CH₂CH₂O)ₙ(CH(CH₃)CH₂O)ₘC(O)R¹; provided when Formula (IIb) is chosen, then at least one R or R⁴ is -H; and at least one R or R⁴ is a linear or branched alkyl group optionally comprising at least 1 unsaturated bond, or combinations thereof; -(CH₂CH₂O)ₙ(CH(CH₃)CH₂O)ₘR²;
or -(CH₂CH₂O)ₙ(CH(CH₃)CH₂O)ₘC(O)R¹; and each R¹⁹ is-H, -C(O)R¹, or - CH₂C[CH₂OR]₃, provided when Formula (IIc) is chosen, then at least one R¹⁹ or R is -H; and at least one R¹⁹ or R is -C(O)R¹,
-(CH₂CH₂O)ₙ(CH(CH₃)CH₂O)ₘR²; or
-(CH₂CH₂O)ₙ(CH(CH₃)CH₂O)ₘC(O)R¹. In Formulas (IIa), (IIb), or (IIc), the -(CH₂CH₂O)- represents oxyethylene groups (EO) and -(CH(CH₃)CH₂O)-represents oxypropylene groups (PO). These compounds can contain only EO groups, only PO groups, or mixtures thereof. These compounds can also be present as a tri-block copolymer designated PEG-PPG-PEG (polyethylene glycol-polypropylene glycol-polyethylene glycol), for example.

Where the isocyanate-reactive compound (b) is from Formula (IIa), any suitable substituted reduced sugar alcohol may be employed, including esters of 1,4-sorbitan, esters of 2,5-sorbitan, and esters of 3,6-sorbitan. In one embodiment, the isocyanate-reactive compound (b) is selected from Formula (IIa) to be Formula (IIa'): 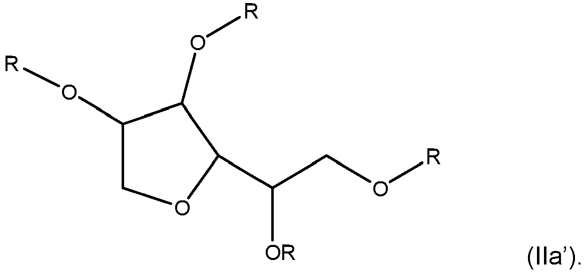 In one embodiment, at least one R is H, and at least one R is -C(O)R¹ or R¹. Compounds used to form residues of Formula (IIa'), having at least one R as -H and at least one R selected from -C(O)R¹, are commonly known as alkyl sorbitans. These sorbitans can be mono-substituted, di-substituted, or tri-substituted with -C(O)R¹. It is known that commercially available sorbitans, such as SPAN, contain a mixture of the various sorbitans ranging from where each R is H (un-substituted), and sorbitans where each R is -C(O)R¹ (fully substituted); wherein R¹ is a linear or branched alkyl group having 5 to 29 carbons; and mixtures of various substitutions thereof. The commercially available sorbitans may also include amounts of sorbitol, isosorbide, or other intermediates or byproducts.

In one embodiment, at least one R is -C(O)R¹, and R¹ is a linear or branched alkyl group having 5 to 29 carbons. In another embodiment, R¹ is a linear or branched alkyl group having 7 to 21 carbons, and in a third embodiment, R¹ is a linear or branched alkyl group having 11 to 21 carbons. Preferred compounds used to form these residues include mono-, di-, and tri-substituted sorbitans derived from caprylic acid, capric acid, lauric acid, mysteric acid, palmitic acid, stearic acid, arachidic acid, behenic acid, lignoceric acid, and mixtures thereof. Particularly preferred compounds include mono-, di-, and tri-substituted sorbitan stearates or sorbitan behenins.

Optionally, R¹ is a linear or branched alkyl group having 5 to 29 carbons comprising at least 1 unsaturated bond. Examples of compounds used to form residues of Formula (IIa') wherein at least one R is selected from -C(O)R¹; and R¹ contains least 1 unsaturated bond, include, but are not limited to, sorbitan trioleate (i.e., wherein R¹ is -C₇H₁₄CH=CHC₈H₁₇). Other examples include but are not limited to mono-, di-, and tri-substituted sorbitans derived from palmitoleic acid, lineolic acid, arachidonic acid, and erucic acid.

In one embodiment, Formula (IIa') is employed, wherein R is further limited to independently a -H; -(CH₂CH₂O)ₙ(CH(CH₃)CH₂O)ₘR²; or -(CH₂CH₂O)ₙ(CH(CH₃)CH₂O)ₘC(O)R¹. In this embodiment, at least one R is independently -(CH₂CH₂O)ₙ(CH(CH₃)CH₂O)ₘR² or -(CH₂CH₂O)ₙ(CH(CH₃)CH₂O)ₘC(O)R¹. In one aspect, R² is H and m is a positive integer such that the substitution is hydrophobic. Compounds of Formula (IIa'), wherein at least one R is -(CH₂CH₂O)ₙ(CH(CH₃)CH₂O)ₘR² or -(CH₂CH₂O)ₙ(CH(CH₃)CH₂O) ₘC(O)R¹, wherein each m is independently 0 to 20, each n is independently 0 to 20, and n+m is greater than 0 are known as polysorbates and are commercially available under the tradename TWEEN. These polysorbates can be mono-substituted, di-substituted, or tri-substituted with alkyl groups R¹ or R². It is known that commercially available polysorbates, contain a mixture of the various polysorbates ranging from where each R² is H (unsubstituted), and polysorbates where each R¹ is a linear or branched alkyl group having 5 to 29 carbons (fully substituted); and mixtures of various substitutions thereof. Examples of compounds of Formula (IIa') include polysorbates such as polysorbate tristearate, and polysorbate monostearate. Examples of compounds of Formula (IIa') wherein m+n is greater than 0, and wherein R¹ comprises at least 1 unsaturated bond, include but are not limited to, polysorbate trioleate (wherein R¹ is C₇H₁₄CH=CHC₈H₁₇), are sold commercially under the name Polysorbate 80. Reagents may include mixtures of compounds having various values for R, R¹, and R², and may also include mixtures of compounds where R¹ comprises at least one unsaturated bond with compounds where R¹ is fully saturated.

In one embodiment, the isocyanate-reactive compound (b) is selected from Formula (IIb). Compounds of Formula (IIb) are known as alkyl citrates. These citrates can be present as a mono-substituted, di-substituted, or tri-substituted compound with alkyl groups. It is known that commercially available citrates contain a mixture of the various citrates as well as citric acids from where R and each R⁴ is -H, ranging to citrates where each R⁴ is a linear or branched alkyl group having 6 to 30 carbons optionally comprising at least 1 unsaturated bond; and mixtures of various substitutions thereof. Mixtures of citrates having various values for R¹, R², and R⁴ may be used, and may also include mixtures of compounds where R¹ comprises at least one unsaturated bond with compounds where R¹ is fully saturated. Alkyl citrates are also commercially available wherein m+n is greater than 0, R⁴ is -(CH₂CH₂O)ₙ(CH(CH₃)CH₂O)ₘR²; or -(CH₂CH₂O)ₙ(CH(CH₃)CH₂O)ₘC(O)R¹ and are present in the various substitutions from wherein R and each R² is H to wherein each R¹ and/or R² is a linear or branched alkyl group having 5 to 30 carbons optionally comprising at least 1 unsaturated bond. Examples of compounds of Formula (IIb) include, but are not limited to, trialkyl citrates.

In one embodiment, the isocyanate-reactive compound (b) is selected from Formula (IIc). Compounds of Formula (IIc) are known as pentaerythriol esters. These pentaerythriol esters can be present as a mono-substituted, di-substituted, or tri-substituted with alkyl groups. Preferred compounds of Formula (IIc) are dipentaerythriol esters, where R¹⁹ is -CH₂C[CH₂OR]₃. It is known that commercially available pentaerythriol esters contain a mixture of the various pentaerythriol esters where R¹⁹ and each R is -H, ranging to pentaerythriol esters where each R is -C(O)R¹, and R¹ is a linear or branched alkyl group having 5 to 29 carbons optionally comprising at least 1 unsaturated bond; and mixtures of various substitutions thereof. The pentaerythriol esters also may contain compounds with mixtures of different chain lengths for R, or mixtures of compounds where R¹ comprises at least one unsaturated bond with compounds where R¹ is fully saturated.

Compounds of Formulas (IIa), (IIb), and (IIc) can all be bio-based derived. By "bio-based derived", it is meant that at least 10% of the material can be produced from non-crude oil sources, such as plants, other vegetation, and tallow. In one embodiment, the substituted sugar alcohol is from about 10% to 100% bio-based derived. In one embodiment, the substituted sugar alcohol is from about 35% to 100% bio-based derived. In another embodiment, the substituted sugar alcohol is from about 50% to 100% bio-based derived. In one embodiment, the substituted sugar alcohol is from about 75% to 100% bio-based derived. In one embodiment, the substituted sugar alcohol is 100% bio-based derived. The average OH value of the substituted sugar alcohol compounds can range from just greater than 0 to about 230. In one embodiment, the average OH value is from about 10 to about 175, and in another embodiment, the average OH value is from about 25 to about 140.

The (poly)isocyanate reactants for all the embodiments of the invention herein are hexamethylene diisocyanate homopolymers commercially available, for instance as DESMODUR N-100, DESMODUR N-75 and DESMODUR N-3200 from Bayer Corporation, Pittsburgh, PA; 3-isocyanatomethyl-3,4,4-trimethylcyclohexyl isocyanate available, for instance as DESMODUR I (Bayer Corporation); bis-(4-isocyanatocylohexyl)methane available, for instance as DESMODUR W (Bayer Corporation) and diisocyanate trimers of Formulas (Illa), (IIIb), (IIIc), (IIId), and (IIIe):

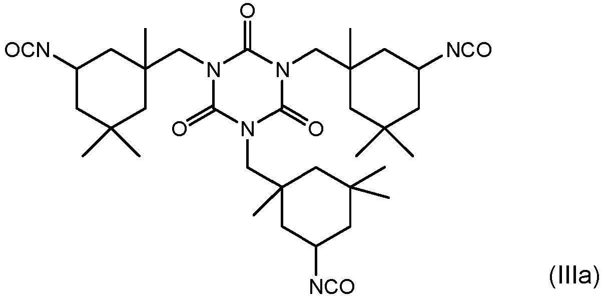

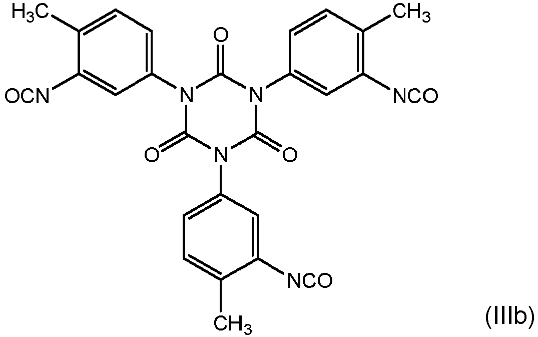

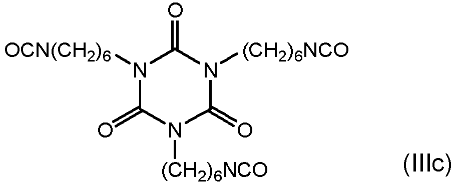

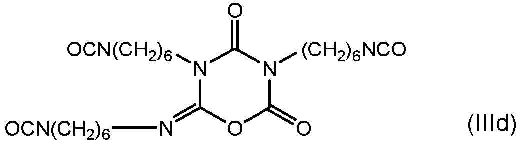

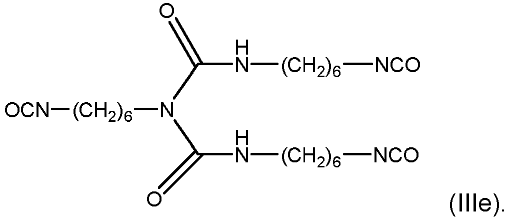

The diisocyanate trimers (IIIa-d) are available, for instance as DESMODUR Z4470, DESMODUR IL, DESMODUR N-3300, and DESMODUR XP2410, respectively, from Bayer Corporation.

Suitable isocyanate-reactive ethylenically unsaturated compounds (c) are selected from hydroxyalkyl vinyl compounds, allylic or methallylic polyether alcohols, aminoalkyl vinyl compounds, acrylic or methacrylic alkyl alcohols, acrylic or methacrylic polyether alcohols, or acrylic or methacrylic amines. Specific examples include but are not limited to poly(ethylene glycol) allyl ethers, hydroxyethyl (meth)acrylate, hydroxypropyl (meth)acrylate, hydroxybutyl (meth)acrylate, and ethoxylated (meth)acrylates.

The bisulfate source (d) is a metabisulfite salt, a bisulfite salt, or a mixture of SO₂ and base. Suitable cations include but are not limited to sodium and potassium. Specific examples include but are not limited to sodium metabisulfite or potassium metabisulfite.

Preferably, the final compound contains 0% to about 1% of reactive isocyanate groups. In one embodiment, the molecular weight of the hydrophobic compound is at least 10,000 g/mol. In one embodiment, the isocyanate-reactive compound or compounds (b) compose 15 to 70% by mol of the total isocyanate-reactive reagents used to form the compound, the isocyanate-reactive ethylenically unsaturated compound (c) composes 10 to 70 % by mol of the total isocyanate-reactive reagents, and the additional isocyanate-reactive compound (e) composes 0 to 70 % by mol of the total isocyanate-reactive reagents. In one embodiment, the isocyanate-reactive compound or compounds (b) compose 30 to 60 % by mol of the total isocyanate-reactive reagents used to form the compound, the isocyanate-reactive ethylenically unsaturated compound (c) composes 25 to 50 % by mol of the total isocyanate-reactive reagents, and the additional isocyanate-reactive compound (e) composes 10 to 50 % by mol of the total isocyanate-reactive reagents. In one embodiment, the isocyanate-reactive compound or compounds (b) compose 30 to 50 % by mol of the total isocyanate-reactive reagents used to form the compound, the isocyanate-reactive ethylenically unsaturated compound (c) composes 25 to 45 % by mol of the total isocyanate-reactive reagents, and the additional isocyanate-reactive compound (e) composes 25 to 45 % by mol of the total isocyanate-reactive reagents. Preferably the sum of molar amount of compound (b) is greater than the sum of molar amount of compound (e).

In one embodiment, water is used to form urea linkages within the compound. In a further embodiment, a compound of Formula (IVa) is present, where D is -(CH₂CH₂O)ₛ(CH(CH₃CH₂O)ₜ-H, or (C(O)-O-(CH₂CH₂O)ₛ(CH(CH₃)CH₂O)ₜH. In this embodiment, -(CH₂CH₂O)-represents oxyethylene groups (EO) and -(CH(CH₃)CH₂O)- represents oxypropylene groups (PO). These polyethers can contain only EO groups, only PO groups, or mixtures thereof. These polyethers can also be present as a tri-block copolymer designated PEG-PPG-PEG (polyethylene glycol-polypropylene glycol-polyethylene glycol). Preferably, the polyethers are the commercially available methoxypolyethylene glycols (MPEG's), or mixtures thereof. Also commercially available, and suitable for the preparation of the compositions of the present invention, are butoxypolyoxyalkylenes containing equal amounts by weight of oxyethylene and oxypropylene groups (Union Carbide Corp. 50-HB Series UCON Fluids and Lubricants) and having an average molecular weight greater than about 1000. In one aspect, the hydroxy-terminal polyethers of Formula (IVa) have an average molecular weight equal to or greater than about 200. In another aspect, the average molecular weight is between 350 and 2000.

In another embodiment, an organic compound of Formula (IVa) is used, where isocyanate-reactive group D is -OH, -C(O)OH, -SH, or - NH(R¹²); and R⁵ is selected from a -C₁ to C₃₀ linear or branched alkyl optionally comprising at least one unsaturated group, a hydroxy-functional C₁ to C₃₀ linear or branched alkyl, a hydroxy-functional linear or branched C₁ to C₃₀ polyether, a hydroxy-functional linear or branched polyester having a polyester polymer backbone, a hydroxy- or amine-functional linear or branched organosiloxane, a thiol-functional C₁ to C₃₀ linear or branched alkyl, an amine-functional C₁ to C₃₀ linear or branched alkyl.

Where D is -OH, examples of Formula (IVa) include but are not limited to alkyl alcohols such as propanol, butanol, or fatty alcohols including stearyl alcohol (R⁵ is a -C₁ to C₃₀ linear or branched alkyl optionally comprising at least one unsaturated group); alkyl diols or polyols such as ethanediol, propanediol, butanediol, or hexanediol (R⁵ is a hydroxy-functional C₁ to C₃₀ linear or branched alkyl); alkylene glycol ethers such as triethylene glycol, tetraethylene glycol, poly(ethylene glycol) (PEG), poly(propylene glycol) (PPG), poly(tetrahydrofuran), or glycol ethers having mixtures of PEG, PPG, or THF units (R⁵ is a hydroxy-functional linear or branched C₁ to C₃₀ polyether); polyester polyols (R⁵ is a hydroxy-functional linear or branched polyester having a polyester polymer backbone); silicone prepolymer polyols (R⁵ is a hydroxy-functional linear or branched organosiloxane); N,N-dimethylaminoethanol (R⁵ is an amine-functional C₁ to C₃₀ linear or branched alkyl); choline chloride or betaine HCl (R⁵ is Y⁻ (R⁷)(R⁸)(R⁹)N⁺R¹⁰-); butanone oxime (R⁵ is (R⁷)(R⁸)C=N-). The polyether polyols can contain only EO groups, only PO groups, only THF groups, or mixtures thereof. These polyethers can also be present as a block copolymer, such as that designated by PEG-PPG-PEG (polyethylene glycol-polypropylene glycol-polyethylene glycol). In one aspect, the polyether glycols have an average molecular weight equal to or greater than about 200. In another aspect, the average molecular weight is between 350 and 2000.

Where D is A is -COOH, examples of Formula (IVa) include but are not limited to fatty acids such as caprylic acid, capric acid, lauric acid, mysteric acid, palmitic acid, stearic acid, arachidic acid, behenic acid, lignoceric acid, palmitoleic acid, lineolic acid, arachidonic acid, oleic acid, or erucic acid (R⁵ is a -C₁ to C₃₀ linear or branched alkyl optionally comprising at least one unsaturated group); hydroxy-containing acids such as hydroxycaprylic acid, hydroxycapric acid, hydroxylauric acid, hydroxymysteric acid, hydroxypalmitic acid, hydroxystearic acid, hydroxyarachidic acid, hydroxybehenic acid, hydroxylignoceric acid, hydroxypalmitoleic acid, hydroxylineolic acid, hydroxyarachidonic acid, hydroxyoleic acid, or hydroxyerucic acid (R⁵ is a hydroxy-functional C₁ to C₃₀ linear or branched alkyl); and mercaptoalkanoic acids such as mercaptopropionic acid (R⁵ is a thiol-functional C₁ to C₃₀ linear or branched alkyl).

Where D is A is -SH, specific examples of Formula (IVa) include but are not limited to alkyl thiols such as lauryl mercaptan or dodecyl mercaptan (R⁵ is a -C₁ to C₃₀ linear or branched alkyl optionally comprising at least one unsaturated group). Where D is -N(R¹²)-C(O)-NH- or A is - NH(R¹²), specific examples of Formula (IVa) include but are not limited to alkyl amines such as diisopropylamine, propylamine, hexylmine, or laurylamine (R⁵ is a -C₁ to C₃₀ linear or branched alkyl optionally comprising at least one unsaturated group); alkanolamines such as ethanolamine or propanolamine (R⁵ is a hydroxy-functional C₁ to C₃₀ linear or branched alkyl); silicone prepolymer polyamines (R⁵ is a amine-functional linear or branched organosiloxane); alkyl diamines (R⁵ is an amine-functional C₁ to C₃₀ linear or branched alkyl); and aminoalkanesulfonic acids such as 2-aminoethanesulfonic acid (R⁵ is HO-S(O)₂R¹⁰-).

In a further embodiment, a compound of Formula (IVb) I used. These compounds are commonly referred to as polyglycerols. These polyglycerols can be present where R³ is independently a -H; -R¹⁸; - C(O)R¹⁸ provided that at least one R³ is a -H; and wherein R¹⁸ is independently a linear or branched alkyl group having 5 to 29 carbons optionally comprising at least 1 unsaturated bond. Specific examples include but are not limited to triglycerol monostearate, triglycerol distearate, hexaglycerol monostearate, hexaglycerol distearate, decaglyceryl mono(carpylate/caprate), decaglyceryl di(carpylate/caprate), decaglycerol, polyglycerol-3, and C₁₈ diglyceride.

In one embodiment, multiple compounds selected from Formulas (IVa), (IVb), and (IVc) are used. In addition to compounds of the present invention as described herein, these compositions may also comprise additional compounds that are present from commercially available sorbitans, polysorbates, alkyl citrates, or pentaethritols. These compounds can be present as a mixture of the various substituted sugar alcohols from fully unsubstituted to fully substituted, and the various substitutions in between, and optionally, the linear or branched alkyl group having 5 to 29 carbons comprises at least 1 unsaturated bond.

The compounds are preferably part of an aqueous composition but may further comprise a solvent selected from organic solvents. The aqueous composition may be in the form of an aqueous solution, an aqueous emulsion, or an aqueous dispersion.

In one embodiment, the invention is drawn to a method of preparing a compound comprising (i) reacting (a) at least one isocyanate group-containing compound as defined above; (b) at least one isocyanate-reactive compound as defined above; and (c) at least one isocyanate-reactive ethylenically unsaturated compound as defined above; and (ii) reacting the reaction product of step (i) with (d) a bisulfate source as defined above in the presence of a radical initiator.

The reaction product of step (i) can be made in one step, including those compounds made with mixtures of compounds (b) or mixtures of compounds (e). In one embodiment, if more than one compound (b) or (e) is present, then the synthesis can be completed sequentially. A sequential addition is especially useful when employing substituted sugar alcohols with high OH numbers, or when using polyfunctional compounds of Formulas (IVa) or (IVb). In this case, molar concentrations of the isocyanate-reactive compound (b) are such that there remains unreacted isocyanate groups to react with compounds (c) and (e).

This reaction is typically conducted by charging a reaction vessel with the diisocyanate and/or polyisocyanate, the at least one isocyanate-reactive compound (b), the isocyanate-reactive ethylenically unsaturated compound (c), and optionally an additional isocyanate-reactive compound (e). The order of reagent addition is not critical, but if water is used, the water should be added after the isocyanate(s) and compounds (b) and (c).

The specific weight of the reactants charged is based on their equivalent weights and on the working capacity of the reaction vessel, and is adjusted so that substituted sugar alcohol will be consumed in the first step. A suitable dry organic solvent free of isocyanate-reactive groups is typically used as a solvent. Ketones are the preferred solvents, and methylisobutylketone (MIBK) is particularly preferred for convenience and availability. The charge is agitated, and temperature adjusted to about 40 °C to 70 °C. Typically, a catalyst such as iron(III) chloride in an organic solvent is then added, typically in an amount of from about 0.01 to about 1.0 weight % based on the dry weight of the composition, and the temperature is raised to about 80 °C to 100 °C. A co-catalyst, such as sodium carbonate, may also be used. If water is to be added, the initial reaction is conducted so that less than 100% of the isocyanate groups are reacted. In the second step after holding for several hours, additional solvent, water, and optionally a second compound are added. In one embodiment, the mixture is allowed to react for several more hours or until all of the isocyanate has been reacted. Additional water can then be added along with surfactants, if desired, to the urethane compounds and stirred until thoroughly mixed. Following a homogenization or sonification step, the organic solvent can be removed by evaporation at reduced pressure.

The sulfonation step may follow the process of US 5,117,041. For example, a bisulfate source may be contacted with the functional urethane polymer in the presence of a free radical initiator and an aqueous medium, adding the bisulfate source in increments over time to yield sulfinate-containing sulfonated products. The sulfinate content is then oxidized to give sulfonated urethane polymers.

It will be apparent to one skilled in the art that many changes to any or all of the above procedures can also be used to optimize the reaction conditions for obtaining maximum yield, productivity, or product quality.

In another embodiment, the invention relates to a method of reducing the surface tension of an aqueous medium comprising contacting the aqueous medium with a compound comprising the reaction product of the method as described above.

The aqueous medium may be any suitable medium, including but not limited to water, aqueous repellency treatment coatings, water-based floor finishes, or aqueous paints. In one embodiment, the invention relates to a coating composition made by contacting the inventive compound with an aqueous coating base. In one embodiment, the coating comprises a coating base selected from the group consisting of an acrylic polymer, epoxy polymer, vinyl polymer, and polyurethane polymer in the form of an interior house paint, exterior house paint, stain, or clear coating. Such paints are readily available in the marketplace under a number of major brands. Such coatings may be unpigmented or may be pigmented with compounds including but not limited to titanium dioxide.

In another embodiment, the coating is a floor wax, floor finish, or floor polish. Floor waxes, polishes, or finishes are generally water-based or solvent-based polymer emulsions. Commercially available floor finish compositions typically are aqueous emulsion-based polymer compositions comprising one or more organic solvents, plasticizers, coating aides, antifoaming agents, surfactants, polymer emulsions, metal complexing agents, and waxes. The particle size range and solids content of the polymer are usually controlled to control the product viscosity, film hardness and resistance to deterioration. Polymers containing polar groups function to enhance solubility and may also act as wetting or leveling agents providing good optical properties such a high gloss and distinctness of reflected image. Preferred polymers for use in floor finishes include acrylic polymers, polymers derived from cyclic ethers, and polymers derived from vinyl substituted aromatics. Polyesters, polyamides, polyurethanes and polysiloxanes are also used in floor finishes. The waxes or mixtures of waxes that are used in floor finishes include waxes of a vegetable, animal, synthetic, and/or mineral origin. Representative waxes include, for example, carnuba, candelilla, lanolin, stearin, beeswax, oxidized polyethylene wax, polyethylene emulsions, polypropylene, copolymers of ethylene and acrylic esters, hydrogenerated coconut oil or soybean oil, and the mineral waxes such as paraffin or ceresin.

In another embodiment, the invention relates to a method of providing a surface effect to a fibrous substrate comprising contacting a fibrous substrate with the reaction product of the method as described above.

The reaction product of the method of the present invention as described above is contacted with the fibrous substrate by any suitable method. Such methods include, but are not limited to, application by exhaustion, foam, flex-nip, nip, pad, kiss-roll, beck, skein, winch, liquid injection, overflow flood, roll, brush, roller, spray, dipping, immersion, and the like. The reaction product is also contacted by use of a beck dyeing procedure, continuous dyeing procedure or thread-line application.

The reaction product of the method of the present invention is applied to the substrate as such, or in combination with other optional textile finishes or surface treating agents. Such optional additional components include treating agents or finishes to achieve additional surface effects, or additives commonly used with such agents or finishes. Such additional components comprise compounds or compositions that provide surface effects such as no iron, easy to iron, shrinkage control, wrinkle free, permanent press, moisture control, softness, strength, anti-slip, anti-static, anti-snag, anti-pill, stain release, soil repellency, soil release, water repellency, odor control, antimicrobial, sun protection, cleanability and similar effects. Such components may be fluorinated or non-fluorinated. One or more of such treating agents or finishes are applied to the substrate before, after, or simultaneously with the composition of the present invention. For example, for fibrous substrates, when synthetic or cotton fabrics are treated, use of a wetting agent can be desirable, such as ALKANOL 6112 available from E. I. du Pont de Nemours and Company, Wilmington, DE. When cotton or cotton-blended fabrics are treated, a wrinkle-resistant resin can be used such as PERMAFRESH EFC available from Omnova Solutions, Chester, SC.

Other additives commonly used with such treating agents or finishes are also optionally present, such as surfactants, pH adjusters, cross linkers, wetting agents, wax extenders, and other additives known by those skilled in the art. Suitable surfactants include anionic, cationic, nonionic, N-oxides and amphoteric surfactants. Examples of such additives include processing aids, foaming agents, lubricants, anti-stains, and the like. The composition is applied at a manufacturing facility, retailer location, or prior to installation and use, or at a consumer location.

Optionally, a blocked isocyanate is added with the composition of the present invention to further promote durability (i.e., as a blended composition). An example of a suitable blocked isocyanate to use in the present invention is PHOBOL XAN available from Huntsman Corp, Salt Lake City, UT. Other commercially available blocked isocyanates are also suitable for use herein. The desirability of adding a blocked isocyanate depends on the particular application for the copolymer. For most of the presently envisioned applications, it does not need to be present to achieve satisfactory cross-linking between chains or bonding to the substrate. When added as a blended isocyanate, amounts up to about 20% by weight are added.

The optimal treatment for a given substrate depends on (1) the characteristics of the compound or composition of the present invention, (2) the characteristics of the surface of the substrate, (3) the amount of compound or composition of the present invention applied to the surface, (4) the method of application of the compound or composition of the present invention onto the surface, and many other factors. Some reaction products of the method of the present invention work well on many different substrates and are repellent to water. Dispersions prepared from reaction products of the method of the present invention are generally applied to fibrous substrates by spraying, dipping, padding, or other well-known methods. After excess liquid has been removed, for example by squeeze rolls, the treated fibrous substrate is dried and then cured by heating, for example, to from about 100 °C to about 190 °C, for at least 30 seconds, typically from about 60 to about 240 seconds. Such curing enhances oil-, water- and soil repellency and durability of the repellency. While these curing conditions are typical, some commercial apparatus may operate outside these ranges because of its specific design features.

In another embodiment, the present invention is a fibrous substrate having applied to its surface a reaction product of the method as disclosed above. The fibrous substrates is selected from fibers, yarns, fabrics, fabric blends, textiles, nonwovens, paper, leather, and carpets. These are made from natural or synthetic fibers including cotton, cellulose, wool, silk, rayon, nylon, aramid, acetate, acrylic, jute, sisal, sea grass, coir, polyamide, polyester, polyolefin, polyacrylonitrile, polypropylene, polyaramid, or blends thereof. By "fabric blends" is meant fabric made of two or more types of fibers. Typically, these blends are a combination of at least one natural fiber and at least one synthetic fiber, but also can include a blend of two or more natural fibers or of two or more synthetic fibers. The nonwoven substrates include, for example, spunlaced nonwovens, such as SONTARA available from E. I. du Pont de Nemours and Company, Wilmington, DE, and spunbonded-meltblown-spunbonded nonwovens. The treated substrates of the present invention have excellent water repellency and optionally stain release properties.

The reaction products of the method of the present invention are useful to provide excellent stain release to treated substrates and compositions which are comparable to commercially available fluorinated treating agents.

### Test Methods and Materials

All solvents and reagents, unless otherwise indicated, were purchased from Sigma-Aldrich, St. Louis, MO, and used directly as supplied. MPEG 750 and MPEG 350 are defined as poly(ethylene glycol) methyl ether 750 and poly(ethylene glycol) methyl ether 350, respectively, and are commercially available from Sigma-Aldrich, St. Louis, MO. Tergitol^{®} TMN-10 and TWEEN 85 are commercially available from Sigma-Aldrich, St. Louis, MO.

Sorbitan tristearate is commercially available from Croda, East Yorkshire, England, or DuPont Nutrition & Health, Copenhagen, Denmark. Sorbitan ester - lauric acid, pentaerythritol tristearate, and sorbitan tribehenin are available from DuPont Nutrition & Health, Copenhagen, Denmark. Sorbitan trioleate was obtained from Croda, East Yorkshire, England.
DESMODUR N-100 and DESMODUR N3300 were obtained from Bayer Corporation, Pittsburgh, PA.
Pentaerythritol stearate
Citrate G-66 is a trioctyldecyl citrate commercially available from Lubrizol, Wickliffe, Ohio.
BLEMMER PKA 5004, 5005, and 5013 are polyethylene glycol allyl ethers commercially available from NOF Corporation, Tokyo, Japan.
6,2-alcohol is 3,3,4,4,5,5,6,6,7,7,8,8,8-tridecafluoro-1-octanol and is available from DuPont Chemicals and Fluoroproducts, Wilmington, DE.

The following test methods and materials were used in the examples herein.

### Test Method 1 - Water Repellency

The water repellency of a treated substrate was measured according to the DuPont Technical Laboratory Method as outlined in the TEFLON Global Specifications and Quality Control Tests information packet. The test determines the resistance of a treated substrate to wetting by aqueous liquids. Drops of water-alcohol mixtures of varying surface tensions are placed on the fabric and the extent of surface wetting is determined visually. The test provides a rough index of aqueous stain resistance. The higher the water repellency rating, the better the resistance the finished substrate has to staining by water-based substances. The composition of standard test liquids is shown in the following Table 1. Ratings of 0.5 increments are determined by subtracting one half from the numbers in Table 1 for borderline passing of the test liquid.

**Table 1. Standard Test Liquids**

| **Water Repellency Rating** | **Composition Vol.%, Isopropyl Alcohol** | **Composition Vol. %, Distilled Water** |
|---|---|---|
| 1 | 2 | 98 |
| 2 | 5 | 95 |
| 3 | 10 | 90 |
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

### Test Method 2 - Oil Repellency

The treated fabric samples were tested for oil repellency by a modification of AATCC standard Test Method No. 118, conducted as follows: A fabric sample, treated with an aqueous dispersion of polymer, was conditioned for a minimum of 15 hours at 23 °C + 65 % relative humidity prior to testing. A series of organic liquids, identified below in Table 2, were then applied drop wise to the fabric samples. Beginning with the lowest numbered test liquid (Repellency Rating No. 1), one drop (approximately 5 mm in diameter or 0.05 mL volume) was placed on each of three locations at least 5 mm apart. The drops were observed for 30 seconds. If, at the end of this period, two of the three drops were still spherical in shape with no wicking around the drops, three drops of the next highest numbered liquid were placed on adjacent sites and similarly observed for 30 seconds. The procedure was continued until one of the test liquids resulted in two of the three drops failing to remain spherical to hemispherical, or wetting or wicking occurred.

The oil repellency rating of the fabric was the highest numbered test liquid for which two of the three drops remained spherical to hemispherical, with no wicking for 30 seconds. Ratings of 0.5 increments were determined by subtracting one-half from the number in Table 2 for borderline passing of the next liquid. Higher ratings indicate greater repellency. The composition of oil repellency test liquids is shown in the Table 2.

**Table 2. Oil Repellency Test Liquids**

| **Oil Repellency Rating** | **Test Solution** |
|---|---|
| 1 | NUJOL Purified Mineral Oil |
| 2 | 65/35 NUJOL/n-hexadecane by volume at 21°C |
| 3 | n-hexadecane |
| 4 | n-tetradecane |
| 5 | n-dodecane |
| 6 | n-decane |

### Test Method 3 - Spray Test

The dynamic water repellency of treated substrates was measured according to the American Association of Textile Chemists and Colorists (AATCC) TM-22. Samples are visually scored by reference to published standards, with a rating of 100 denoting no water penetration or surface adhesion. A rating of 90 denotes slight random sticking or wetting without penetration; lower values indicate progressively greater wetting and penetration. Test Method 2, the dynamic water repellency test, is a demanding and realistic test of water repellency.

### Test Method 4 - Stain Release

This test measures the ability of a fabric to release oily stains during home laundering.

Treated textiles are placed on a flat surface. Using an eyedropper, 5 drops of MAZOLA Corn Oil or mineral oil (0.2 mL) were placed onto the fabric to form 1 drop of oil. A weight (5 lb, 2.27 kg) is placed on top of the oil drop with a piece of glassine paper separating the oil drop. The weight was left in place for 60 seconds. After 60 seconds, the weight and glassine paper are removed. The textiles samples were then washed using a automatic washer high for 12 minutes with AATCC 1993 Standard Reference Detergent WOB12 or granular detergent (100 g). The textiles were then dried on high for 45-50 minutes. The textiles were then evaluated for residual stain of 1 to 5, 1 having the largest residual stain remaining and 5 being no stain residual was visible. In the examples below, stain release ratings of corn oil are designated by the term "Corn Oil", and stain release ratings of mineral oil are designated by the term "Mineral Oil".

### Test Method 5 - Fabric Treatment

The fabrics treated in this study were 100% by weight khaki cotton twill available from SDL Atlas Textile Testing Solutions, Rock Hill, South Carolina 29732 and 100% by weight red polyester fabric available from L. Michael OY, Finland. The fabric was treated with the aqueous dispersions various emulsion polymer using a conventional pad bath (dipping) process. The prepared concentrated dispersion of the polymer emulsions were diluted with deionized water to 10% by weight of polymer solids.

Examples of the compounds and compositions of the instant invention can be made from various isocyanates and isocyanate-reactive compounds, or mixtures thereof. The present invention is not to be limited by the examples below.

### Preparation of Urethane 1 (U1)

A dry 4-neck 500 mL round bottom flask was assembled with a thermocouple, mechanical stirrer, a nitrogen inlet, condenser, and gas outlet. The flask was charged with DESMODUR N3300 (12.0 g), MIBK (87.4 g), and FeCl₃ solution (0.5 wt% in MIBK, 0.5 g). The reaction mixture was heated to 60 °C. BLEMMER PKA 5004 (23.32 g) and Na₂CO₃ (0.55 g) were added to the flask, the temperature was raised to 95 °C, and the mixture was stirred for one hour. After one hour, sorbitan tristearate (22.95 g) was added, and the reaction was stirred overnight at 95 °C. When the reaction tested negative for active isocyanates, warm DI water (235.2 g) and diacetin (14.7 g) were mixed into a plastic container and added to the flask. The mixture was stirred for 30 minutes at 75 °C. MIBK was removed via distillation, and the product was filtered through a milk filter.

### Preparation of Urethane 2 (U2)

The Preparation of Urethane 1 procedure was repeated, using DESMODUR N3300 (19.89 g), MIBK (246.3 g), and FeCl₃ solution (0.5 wt% in MIBK, 0.83 g), BLEMMER PKA 5013 (106.3 g), Na₂CO₃ (0.91 g), sorbitan tristearate (38.04 g), and warm DI water (660 g).

### Preparation of Urethane 3 (U3)

A dry 4-neck 500 mL round bottom flask was assembled with a thermocouple, mechanical stirrer, a nitrogen inlet, condenser, and gas outlet. The flask was charged with DESMODUR N100 (17.47 g), MIBK (10.8 g), and FeCl₃ solution (0.5 wt% in MIBK, 0.49 g). BLEMMER PKA 5004 (10.8 g) and MPEG 750 (10.8 g) were added to the flask. The temperature was then raised to 95 °C and stirred for one hour. After one hour, perfluorhexylethyl alcohol (14.0 g) was added. The reaction was stirred for four hours, and water (4.0 g) and MIBK (13.4) were added. The reaction was stirred at 95 °C. When the reaction tested negative for active isocyanates, warm DI water (212.5 g) was added to the flask and the mixture was stirred for 30 minutes at 75 °C. MIBK was removed via distillation, and the product was filtered through a milk filter.

### Preparation of Urethanes 4-23 (U4-U23)

A dry 30-mL vial was charged with DESMODUR N3300 (1.5 g), MIBK (40 wt% solution after addition of all components), FeCl₃ catalyst solution (0.5 wt% in MIBK, 0.06-0.10 g), and Na₂CO₃ (68 mg). A nitrogen line was connected and the mixture was heated to 60 °C. MPEG (750 or 350) and Blemmer PKA (5004, 5005, or 5013) were added according to Table 3. The temperature was raised to 95 °C and stirred for 1 hour. Then fluorinated alcohols and/or substituted sugar alcohols were added according to Table 3, and the reaction was stirred overnight. When the reaction tested negative for active isocyanates, hot DI water was added to the vial. The mixture was transferred to a round bottom flask and combined with additional hot DI water to yield a product at 10-20% solids of urethane polymer. MIBK was removed via rotary evaporation.

**Table 3. Reagents Used in Urethanes 4-23**

| | Compound (b) | | Compound (c) | | Additional Monomer | |
|---|---|---|---|---|---|---|
| | Compound | Amt (g) | Compound | Amt (g) | Compound | Amt (g) |
| U4 | 6,2-alcohol | 1.41 | PKA 5004 | 2.94 | | |
| U5 | 6,2-alcohol | 1.41 | PKA 5004 | 1.47 | MPEG 750 | 1.46 |
| U6 | 6,2-alcohol | 1.41 | PKA 5004 | 1.47 | MPEG 350 | 0.68 |
| U7 | 6,2-alcohol | 1.41 | PKA 5005 | 2.99 | MPEG 750 | 1.46 |
| U8 | 6,2-alcohol | 1.41 | PKA 5013 | 4.01 | MPEG 750 | 1.46 |
| U9 | Sorbitan tristearate/ 6,2-alcohol | 1.43/ 0.71 | PKA 5004 | 2.94 | | |
| U10 | Sorbitan tristearate/ 6,2-alcohol | 1.43/ 0.71 | PKA 5004 | 1.47 | MPEG 750 | 1.46 |
| U11 | Sorbitan tristearate/ 6,2-alcohol | 1.43/ 0.71 | PKA 5005 | 2.99 | MPEG 750 | 1.46 |
| U12 | Sorbitan trilaurate | 1.75 | PKA 5004 | 1.47 | MPEG 750 | 1.46 |
| U13 | Sorbitan trilaurate | 3.82 | PKA 5004 | 1.47 | MPEG 750 | 2.91 |
| U14 | TWEEN 85 | 5.19 | PKA 5004 | 1.47 | MPEG 750 | 1.46 |
| U15 | Sorbitan tristearate | 2.87 | PKA 5004 | 1.47 | MPEG 750 | 1.46 |
| U16 | Sorbitan tristearate | 2.87 | PKA 5013 | 4.01 | MPEG 750 | 1.46 |
| U17 | Sorbitan tristearate | 2.87 | PKA 5005 | 2.99 | MPEG 750 | 1.46 |
| U18 | Sorbitan tristearate | 2.87 | PKA 5004 | 1.47 | MPEG 350 | 0.68 |
| U19 | Sorbitan tribehenin | 3.28 | PKA 5004 | 1.75 | MPEG 750 | 1.35 |
| U20 | Sorbitan trilaurate | 7.65 | PKA 5004 | 1.47 | MPEG 750 | 1.46 |
| U21 | Sorbitan trioleate | 3.41 | PKA 5004 | 1.80 | MPEG 750 | 1.20 |
| U22 | Citrate G-66 | 4.02 | PKA 5004 | 1.47 | MPEG 750 | 1.46 |
| U23 | Pentaerythritol tristearate | 3.57 | PKA 5004 | 1.47 | MPEG 750 | 1.46 |

### Comparative Example A

Untreated fabric samples were tested according to the test methods above. Both cotton and polyester fabrics had a water drop rating of 0, an oil drop rating of 0, and a spray rating of 0.

### Examples 1-23

The pH of the polyurethane solution (U1 to U23) was adjusted to 2.00-3.25 with sulfuric acid and weighed into a glass container with a rubber septum. Solid sodium metabisulfite (20% of total amount, 0.40 molar equivalent of PKA monomer) was added, and the mixture was stirred at room temperature until homogeneous. Iron (II) sulfate pentahydrate was added (0.001 molar equivalent of PKA monomer). Sodium persulfate solution 12.5 wt% in water was added (0.041 molar equivalent of PKA monomer). The mixture was stirred at room temperature under atmospheric pressure for 1 hour. The rest of sodium metabisulfite (80% of total amount, 1.60 molar equivalent of PKA monomer) was added. Additional catalyst sodium persulfate solution was added (0.041 molar equivalent of PKA monomer). The mixture was stirred at room temperature for 1 hour and the third portion of sodium persulfate solution was added (0.041 molar equivalent of PKA monomer). The mixture was stirred for one more hour, and the pH was adjusted to 4.0-5.5 with sodium hydroxide solution. 30% hydrogen peroxide solution (0.6 molar equivalent of PKA monomer) was added. The mixture was stirred for one hour at room temperature. When a peroxide test indicated a negative response, the pH was adjusted to ~5.0. Each solution was diluted to 10.0% solids, applied on fabric and tested according to the test methods above.

**Table 4. Performance Data of Examples 1-23 on Cotton**

| **Example** | **Urethane** | **Water Drop** | **Oil Drop** | **Spray Rating** | **Corn Oil** | **Mineral Oil** |
|---|---|---|---|---|---|---|
| 1 | U1 | 3 | 0 | 70 | 2 | 2 |
| 2 | U2 | 2 | 0 | 60 | 1 | 1 |
| 3 | U3 | 1 | 6 | 50 | 4 | 4 |
| 4 | U4 | 1 | 5 | 50 | 5 | 5 |
| 5 | U5 | 1 | 6 | 50 | 5 | 5 |
| 6 | U6 | 1 | 6 | 60 | 4 | 4 |
| 7 | U7 | 1 | 6 | 60 | 5 | 5 |
| 8 | U8 | 1 | 5 | 60 | 5 | 5 |
| 9 | U9 | 1 | 5 | 60 | 5 | 5 |
| 10 | U10 | 1 | 2 | 50 | 3 | 3 |
| 11 | U11 | 3 | 5 | 70 | 4 | 3 |
| 12 | U12 | 1 | 0 | 50 | 2 | 2 |
| 13 | U13 | 1 | 0 | 50 | 3 | 3 |
| 14 | U14 | 0 | 0 | 0 | 2 | 2 |
| 15 | U15 | 3 | 0 | 70 | 2 | 2 |
| 16 | U16 | 2 | 0 | 60 | 3 | 3 |
| 17 | U17 | 3 | 0 | 60 | 5 | 4.5 |
| 18 | U18 | 3 | 0 | 70 | 4 | 4 |
| 19 | U19 | 3 | 0 | 60 | 4 | 4 |
| 20 | U20 | 0 | 0 | 50 | 4 | 3 |
| 21 | U21 | 0 | 0 | 0 | 2 | 2 |
| 22 | U22 | 0 | 0 | 0 | 2 | 2 |
| 23 | U23 | 3 | 0 | 70 | 4 | 3 |

**Table 5. Performance Data of Examples 1-23 on Polyester**

| **Example** | **Urethane** | **Water Drop** | **Oil Drop** | **Spray Rating** | **Corn Oil** | **Mineral Oil** |
|---|---|---|---|---|---|---|
| 1 | U1 | 1 | 0 | 50 | 4 | 2 |
| 2 | U2 | 0 | 0 | 50 | 1 | 1 |
| 3 | U3 | 1 | 5 | 50 | 2 | 4 |
| 4 | U4 | 0 | 4 | 50 | 5 | 5 |
| 5 | U5 | 0 | 4 | 50 | 4.5 | 5 |
| 6 | U6 | 0 | 4 | 50 | 4 | 3 |
| 7 | U7 | 0 | 4 | 50 | 2 | 4 |
| 8 | U8 | 0 | 3 | 50 | 1 | 2 |
| 9 | U9 | 0 | 4 | 50 | 5 | 5 |
| 10 | U10 | 0 | 1 | 50 | 3 | 3 |
| 11 | U11 | 0 | 5 | 50 | 4 | 4 |
| 12 | U12 | 0 | 0 | 0 | 2 | 1 |
| 13 | U13 | 0 | 0 | 0 | 1 | 1 |
| 14 | U14 | 0 | 0 | 0 | 2 | 1 |
| 15 | U15 | 0 | 0 | 50 | 2 | 2 |
| 16 | U16 | 0 | 0 | 50 | 2 | 3 |
| 17 | U17 | 0 | 0 | 50 | 4.5 | 5 |
| 18 | U18 | 2 | 0 | 50 | 5 | 5 |
| 19 | U19 | 1 | 0 | 50 | 4 | 2 |
| 20 | U20 | 0 | 0 | 0 | 1 | 1 |
| 21 | U21 | 0 | 0 | 0 | 4 | 2 |
| 22 | U22 | 0 | 0 | 0 | 2 | 2 |
| 23 | U23 | 0 | 0 | 50 | 2 | 3 |

## Claims

1. A method of preparing a compound comprising:
(i) reacting (a) at least one isocyanate group-containing compound selected from hexamethylene diisocyanate homopolymers, 3-isocyanatomethyl-3,4,4-trimethylcyclohexyl isocyanate, bis-(4-isocyanatocylohexyl)methane, and diisocyanate trimers of Formulas (IIIa), (IIIb), (IIIc), (IIId), and (IIIe): 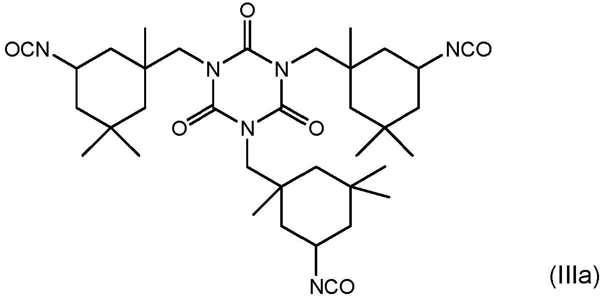 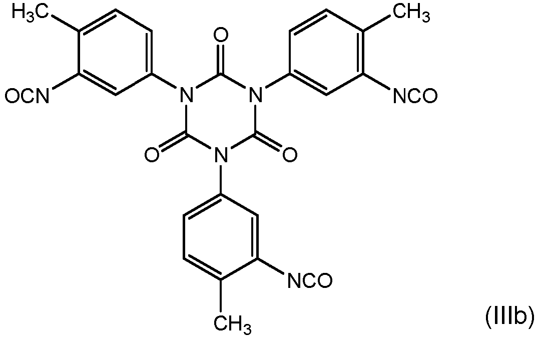 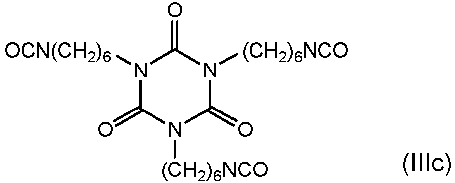 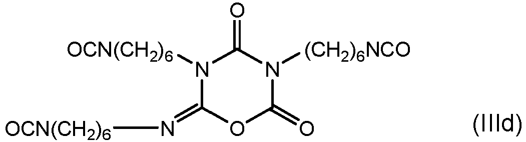 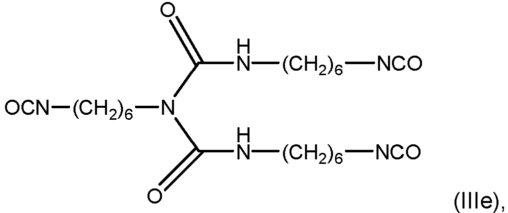
or mixture thereof;
(b) at least one isocyanate-reactive compound selected from the group consisting of a fluorinated alcohol having Formula (I)
R_{f}-A-OH (I),
wherein R_{f} is a C₁ to C₂₀ perfluoroalkyl group optionally interrupted by CH₂, CH₂CH₂, SO₂N, CFH, S, or O; and
A is a direct bond or a C₁ to C₆ alkylene group; or
a cyclic or acyclic sugar alcohol selected from Formulas (IIa), (IIb), or (IIc): 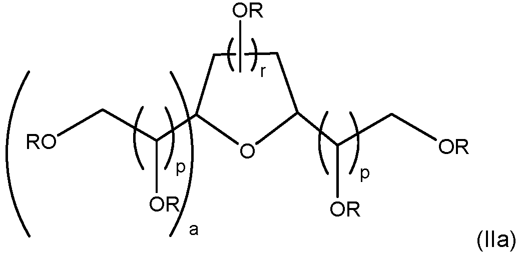 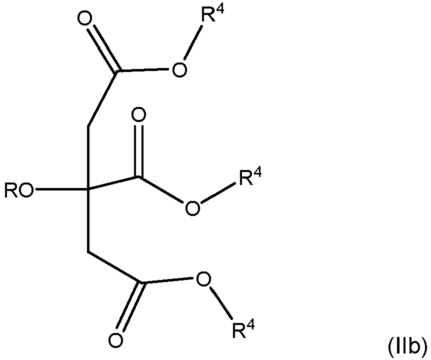 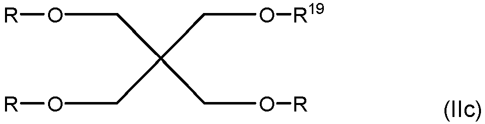
wherein each R is independently -H; -R¹; -C(O)R¹; -(CH₂CH₂O)ₙ(CH(CH₃)CH₂O)ₘR²; or -(CH₂CH₂O)ₙ(CH(CH₃)CH₂O)ₘC(O)R¹;
each n is independently 0 to 20;
each m is independently 0 to 20;
m+n is greater than 0;
r is 1 to 3;
a is 0 or 1;
p is independently 0 to 2;
provided that a is 0 when r is 3;
each R¹ is independently a linear or branched alkyl group having 5 to 29 carbons optionally comprising at least 1 unsaturated bond;
each R² is independently -H, or a linear or branched alkyl group having 6 to 30 carbons optionally comprising at least 1 unsaturated bond;
or mixtures thereof,
provided when Formula (IIa) is chosen, then at least one R is -H and at least one R is a -R¹; -C(O)R¹; -(CH₂CH₂O)ₙ(CH(CH₃)CH₂O)ₘR²;
or -(CH₂CH₂O)ₙ(CH(CH₃)CH₂O)ₘC(O)R¹;
each R⁴ is independently -H, a linear or branched alkyl group having 6 to 30 carbons optionally comprising at least 1 unsaturated bond, or combinations thereof; -(CH₂CH₂O)ₙ(CH(CH₃)CH₂O)ₘR²; or -(CH₂CH₂O)ₙ(CH(CH₃)CH₂O)ₘC(O)R¹;
provided when Formula (IIb) is chosen, then at least one R or R⁴ is -H; and at least one R or R⁴ is a linear or branched alkyl group optionally comprising at least 1 unsaturated bond, or combinations thereof; -(CH₂CH₂O)ₙ(CH(CH₃)CH₂O)ₘR²;
or -(CH₂CH₂O)ₙ(CH(CH₃)CH₂O)ₘC(O)R¹; and
each R¹⁹ is -H, -C(O)R¹, or -CH₂C[CH₂OR]₃, provided when Formula (IIc) is chosen, then at least one R¹⁹ or R is -H; and at least one R¹⁹ or R is -C(O)R¹,
-(CH₂CH₂O)ₙ(CH(CH₃)CH₂O)ₘR²; or -(CH₂CH₂O)ₙ(CH(CH₃)CH₂O)ₘC(O)R¹;
or mixtures thereof;
(c) at least one isocyanate-reactive ethylenically unsaturated compound selected from hydroxyalkyl vinyl compounds, allylic or methallylic polyether alcohols, aminoalkyl vinyl compounds, acrylic or methacrylic alkyl alcohols, acrylic or methacrylic polyether alcohols, or acrylic or methacrylic amines; and
(e) optionally at least one additional isocyanate-reactive compound selected from water, organic compounds of Formula (IVa)
R⁵-D (IVa),
or organic compounds of Formula (IVb)
R³-(OCH₂CH(OR³)CH₂)_{z}-OR³ (IVb),
or mixtures thereof, wherein
R⁵ is selected from a -C₁ to C₃₀ linear or branched alkyl optionally comprising at least one unsaturated group, a hydroxy-functional C₁ to C₃₀ linear or branched alkyl, a hydroxy-functional linear or branched C₁ to C₃₀ polyether, a hydroxy-functional linear or branched polyester having a polyester polymer backbone, a hydroxy-functional linear or branched organosiloxane, an amine-functional linear or branched organosiloxane, a thiol-functional C₁ to C₃₀ linear or branched alkyl, an amine-functional C₁ to C₃₀ linear or branched alkyl, 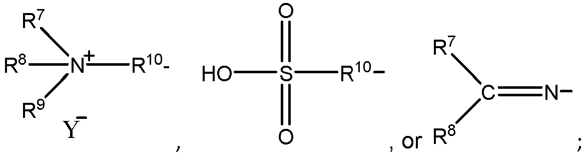
D is selected from -N(R¹²)H, -OH, -COOH, -SH, -O-(CH₂CH₂O)ₛ(CH(CH₃CH₂O)ₜ-H, or (C(O)-O-(CH₂CH₂O)ₛ(CH(CH₃)CH₂O)ₜH;
R³ is independently selected from -H; -R¹⁸; or -C(O)R¹⁸, provided that at least one R³ is -H;
R¹² is -H or a monovalent C₁ to C₆ alkyl group;
R⁷, R⁸, and R⁹ are each independently, -H, -C₁ to C₆ alkyl, or combinations thereof;
R¹⁰ is a divalent alkyl group of 1 to 20 carbons;
R¹⁸ is independently a linear or branched alkyl group having 5 to 29 carbons optionally comprising at least 1 unsaturated bond;
z is 1 to 15;
Y is Cl;
s is an integer of 0 to 50;
t is an integer of 0 to 50; and
s+t is greater than 0; and
(ii) reacting the reaction product of step (i) with (d) a bisulfate source selected from a metabisulfite salt, a bisulfite salt, or a mixture of SO₂ and base in the presence of a radical initiator;
wherein the isocyanate-reactive compound or compounds (b) compose 15 to 70% by mol of the total isocyanate-reactive reagents used to form the compound, the isocyanate-reactive ethylenically unsaturated compound (c) composes 10 to 70 % by mol of the total isocyanate-reactive reagents, and the additional isocyanate-reactive compound (e) composes 0 to 70 % by mol of the total isocyanate-reactive reagents.

2. The method of claim 1, where the isocyanate-reactive compound (b) is selected from Formulas (IIa), (IIb), or (IIc).

3. The method of claim 1, where the isocyanate-reactive compound (b) is a fluorinated alcohol having Formula (I).

4. The method of claim 1, wherein the diisocyanate or polyisocyanate is selected from Formulas (IIIa), (IIIb), (IIIc), (IIId), and (IIIe).

5. The method of claim 2 wherein the isocyanate-reactive compound (b) is selected from Formula (IIa) to be Formula (IIa'): 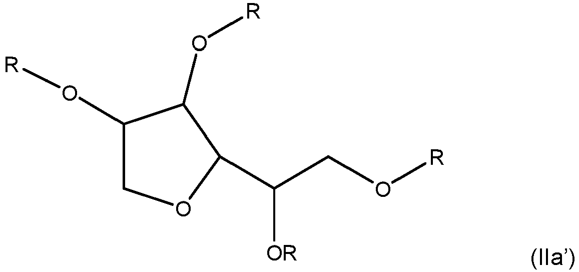 wherein at least one R is-H and at least one R is -R¹; or -C(O)R¹.

6. The method of claim 2 wherein the isocyanate-reactive compound (b) is selected from Formula (IIa) to be Formula (IIa'): 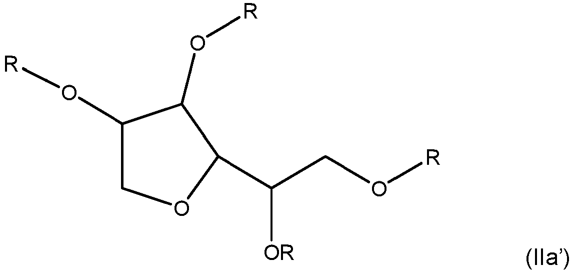
wherein R is further limited to independently -H;
-(CH₂CH₂O)ₙ(CH(CH₃)CH₂O)ₘR²; or
-(CH₂CH₂O)ₙ(CH(CH₃)CH₂O)ₘC(O)R¹; wherein at least one R is independently -(CH₂CH₂O)ₙ(CH(CH₃)CH₂O)ₘR² or -(CH₂CH₂O)ₙ(CH(CH₃)CH₂O)ₘC(O)R¹.

7. An aqueous composition comprising the reaction product of the method of claim 1.

8. A method of reducing the surface tension of an aqueous medium comprising contacting the aqueous medium with the reaction product of the method of any of claims 1 to 6.

9. A method of providing a surface effect to a fibrous substrate comprising contacting a fibrous substrate with the reaction product of the method of any of claims 1 to 6, wherein the surface effect is stain release,
wherein the fibrous substrate is selected from fibers, yarns, fabrics, fabric blends, textiles, nonwovens, paper, leather, and carpets.

10. A fibrous substrate which has been treated by the method of claim 9.

## Patentansprüche

1. Verfahren zur Herstellung einer Verbindung, umfassend:
(i) Umsetzen (a) mindestens einer Isocyanatgruppe enthaltenden Verbindung, ausgewählt aus Hexamethylendiisocyanat-Homopolymeren, 3-Isocyanatomethyl-3,4,4-trimethylcyclohexylisocyanat, Bis-(4-isocyanatocyclohexyl)methan und Diisocyanat-Trimeren von Formeln (IIIa), (IIIb), (IIIc), (IIId) und (IIIe): 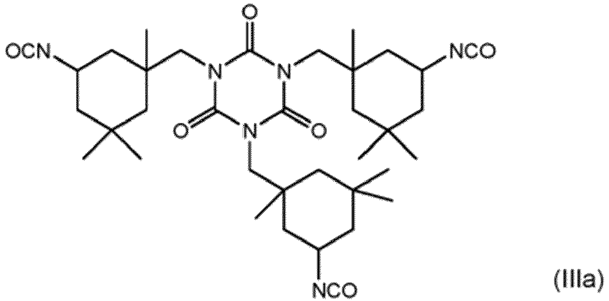 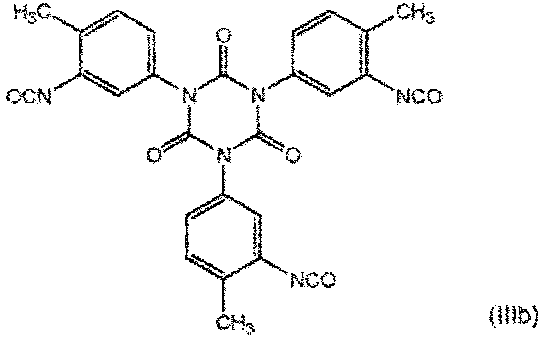 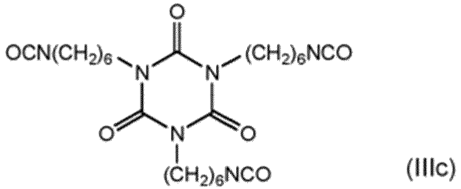 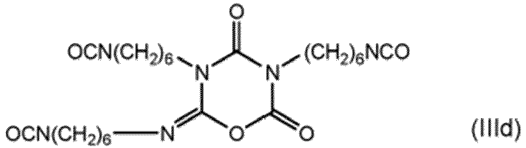 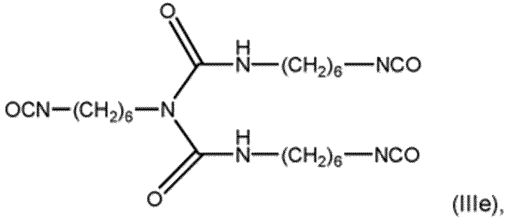
oder einem Gemisch davon;
(b) mindestens einer isocyanatreaktiven Verbindung, ausgewählt aus der Gruppe bestehend aus einem fluorierten Alkohol von Formel (I)
R_{f}-A-OH (I),
wobei R_{f} eine C₁ bis C₂₀-Perfluoralkylgruppe ist, die gegebenenfalls durch CH₂, CH₂CH₂, SO₂N, CFH, S oder O unterbrochen ist; und
A eine direkte Bindung oder eine C₁ bis C₆-Alkylengruppe; oder
ein cyclischer oder acyclischer Zuckeralkohol, ausgewählt aus Formeln (IIa), (IIb) oder (IIc) ist: 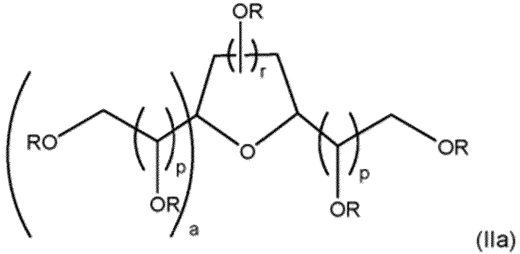 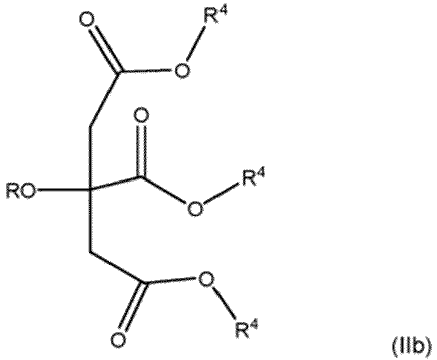 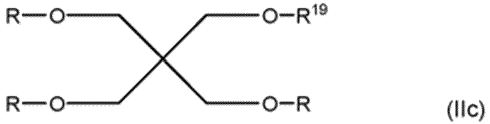
wobei jedes R unabhängig -H; -R¹; -C(O)R¹; -(CH₂CH₂O)ₙ(CH(CH₃)CH₂O)ₘR²; oder - (CH₂CH₂O)ₙ(CH(CH₃)CH₂O)ₘC(O)R¹ ist;
jedes n unabhängig 0 bis 20 ist;
jedes m unabhängig 0 bis 20 ist;
m+n größer als 0 ist;
r 1 bis 3 ist;
a 0 oder 1 ist;
p unabhängig 0 bis 2 ist;
vorausgesetzt, dass a 0 ist, wenn r 3 ist;
jedes R¹ unabhängig eine lineare oder verzweigte Alkylgruppe mit 5 bis 29 Kohlenstoffatomen ist, die gegebenenfalls mindestens eine ungesättigte Bindung umfasst;
jedes R² unabhängig -H oder eine lineare oder verzweigte Alkylgruppe mit 6 bis 30 Kohlenstoffatomen ist, die gegebenenfalls mindestens 1 ungesättigte Bindung umfasst;
oder Gemischen davon,
vorausgesetzt, dass, wenn Formel (IIa) gewählt wird, dann mindestens ein R -H und mindestens ein R ein -R¹; -C(O)R¹; -(CH₂CH₂O)ₙ(CH(CH₃)CH₂O)ₘR²; oder - (CH₂CH₂O)ₙ(CH(CH₃)CH₂O)ₘC(O)R¹ ist;
jedes R⁴ unabhängig -H, eine lineare oder verzweigte Alkylgruppe mit 6 bis 30 Kohlenstoffatomen, die gegebenenfalls mindestens eine ungesättigte Bindung umfasst, oder Kombinationen davon; -(CH₂CH₂O)ₙ(CH(CH₃)CH₂O)ₘR²; oder -(CH₂CH₂O)ₙ(CH(CH₃)CH₂O)ₘC(O)R¹ ist;
vorausgesetzt, dass wenn Formel (IIb) gewählt wird, dann mindestens ein R oder R⁴ -H ist; und mindestens ein R oder R⁴ eine lineare oder verzweigte Alkylgruppe, die gegebenenfalls mindestens eine ungesättigte Bindung oder Kombinationen davon umfasst; -(CH₂CH₂O)ₙ(CH(CH₃)CH₂O)ₘR²;
oder -(CH₂CH₂O)ₙ(CH(CH₃)CH₂O)ₘC(O)R¹ ist; und
jedes R¹⁹ -H, -C(O)R¹ oder -CH₂C[CH₂OR]₃ ist, vorausgesetzt, dass, wenn Formel (IIc) gewählt wird, dann mindestens ein R¹⁹ oder R -H ist; und mindestens ein R¹⁹ oder R-C(O)R¹, - (CH₂CH₂O)ₙ(CH(CH₃)CH₂O)ₘR²; oder -(CH₂CH₂O)ₙ(CH(CH₃)CH₂O)ₘC(O)R¹ ist;
oder Gemischen davon;
(c) mindestens einer isocyanatreaktiven, ethylenisch ungesättigten Verbindung, ausgewählt aus Hydroxyalkylvinylverbindungen, allylischen oder methallylischen Polyetheralkoholen, Aminoalkylvinylverbindungen, Acryl- oder Methacrylalkylalkoholen, Acryl- oder Methacrylpolyetheralkoholen oder Acryl- oder Methacrylaminen; und
(e) gegebenenfalls mindestens einer weiteren isocyanatreaktiven Verbindung, ausgewählt aus Wasser, organischen Verbindungen von Formel (IVa)
R⁵-D (IVa)
oder
organischen Verbindungen von Formel (IVb)
R³-(OCH₂CH(OR³)CH₂)_{z}-OR³ (IVb)
oder Gemischen davon, wobei
R⁵ ausgewählt ist aus einem linearen oder verzweigten -C₁ bis C₃₀-Alkyl, das gegebenenfalls mindestens eine ungesättigte Gruppe umfasst, einem hydroxyfunktionellen linearen oder verzweigten C₁ bis C₃₀-Alkyl, einem hydroxyfunktionellen linearen oder verzweigten C₁ bis C₃₀-Polyether, einem hydroxyfunktionellen linearen oder verzweigten Polyester mit einem Polyesterpolymergerüst, einem hydroxyfunktionellen linearen oder verzweigten Organosiloxan, einem aminfunktionellen linearen oder verzweigten Organosiloxan, einem thiolfunktionellen linearen oder verzweigten C₁ bis C₃₀-Alkyl, einem aminfunktionellen linearen oder verzweigten C₁ bis C₃₀-Alkyl, 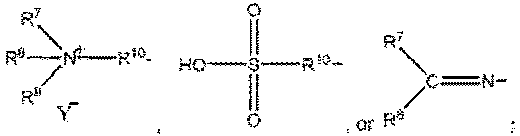
D ausgewählt ist aus -N(R¹²)H, -OH, -COOH, -SH, -O-(CH₂CH₂O)ₛ(CH(CH₃CH₂O)ₜ-H oder (C(O)-O-(CH₂CH₂O)ₛ(CH(CH₃)CH₂O)ₜH;
R³ unabhängig aus -H; -R¹⁸; oder -C(O)R¹⁸ ausgewählt ist, vorausgesetzt, dass mindestens ein R³ -H ist;
R¹² -H oder eine einwertige C₁ bis C₆-Alkylgruppe ist;
R⁷, R⁸, und R⁹ jeweils unabhängig voneinander -H, -C₁ bis C₆-Alkyl oder Kombinationen davon sind;
R¹⁰ eine zweiwertige Alkylgruppe mit 1 bis 20 Kohlenstoffatomen ist;
R¹⁸ unabhängig eine lineare oder verzweigte Alkylgruppe mit 5 bis 29 Kohlenstoffatomen ist, die gegebenenfalls mindestens eine ungesättigte Bindung umfasst;
z 1 bis 15 ist;
Y Cl ist;
n eine ganze Zahl von 0 bis 50 ist;
t eine ganze Zahl von 0 bis 50 ist; und
s+t größer als 0 ist;
und
(ii) Umsetzen des Reaktionsprodukts aus Schritt (i) mit (d) einer Bisulfatquelle, ausgewählt aus einem Metabisulfitsalz, einem Bisulfitsalz oder einem Gemisch aus SO₂ und Base in Gegenwart eines Radikalinitiators;
wobei die isocyanatreaktive(n) Verbindung(en) (b) 15 bis 70 Mol-% der gesamten zur Bildung der Verbindung verwendeten isocyanatreaktiven Reagenzien ausmachen, die isocyanatreaktive ethylenisch ungesättigte Verbindung (c) 10 bis 70 Mol-% der gesamten isocyanatreaktiven Reagenzien ausmacht und die zusätzliche isocyanatreaktive Verbindung (e) 0 bis 70 Mol-% der gesamten isocyanatreaktiven Reagenzien ausmacht.

2. Verfahren nach Anspruch 1, wobei die isocyanatreaktive Verbindung (b) aus Formeln (IIa), (IIb) oder (IIc) ausgewählt ist.

3. Verfahren nach Anspruch 1, wobei es sich bei der isocyanatreaktiven Verbindung (b) um einen fluorierten Alkohol von Formel (I) handelt.

4. Verfahren nach Anspruch 1, wobei das Diisocyanat oder Polyisocyanat aus Formeln (IIIa), (IIIb), (IIIc), (IIId) und (IIIe) ausgewählt ist.

5. Verfahren nach Anspruch 2, wobei die isocyanatreaktive Verbindung (b) aus Formel (IIa) ausgewählt ist, um Formel (IIa') zu sein: 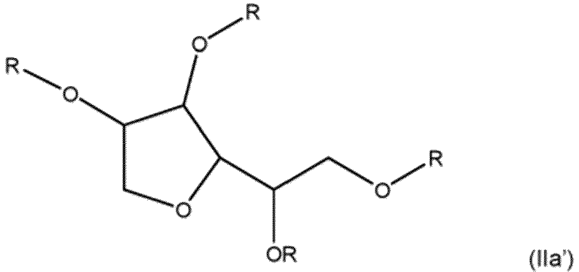 wobei mindestens ein R -H und mindestens ein R -R¹; oder -C(O)R¹ ist.

6. Verfahren nach Anspruch 2, wobei die isocyanatreaktive Verbindung (b) aus Formel (IIa) ausgewählt ist, um Formel (IIa') zu sein: 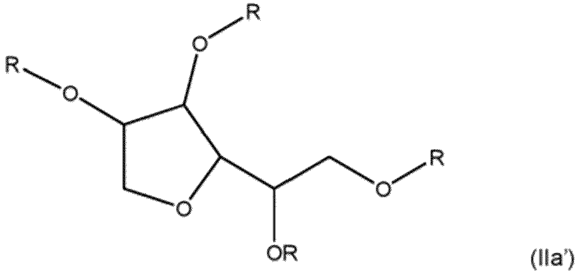
wobei R ferner beschränkt ist, unabhängig -H;
-(CH₂CH₂O)ₙ(CH(CH₃)CH₂O)ₘR²; oder
-(CH₂CH₂O)ₙ(CH(CH₃)CH₂O)ₘC(O)R¹ zu sein; wobei
mindestens ein R unabhängig -(CH₂CH₂O)ₙ(CH(CH₃)CH₂O)ₘR²
oder -(CH₂CH₂O)ₙ(CH(CH₃)CH₂O)ₘC(O)R¹ ist.

7. Wässrige Zusammensetzung, die das Reaktionsprodukt des Verfahrens nach Anspruch 1 umfasst.

8. Verfahren zur Verringerung der Oberflächenspannung eines wässrigen Mediums, umfassend In-Kontakt-Bringen des wässrigen Mediums mit dem Reaktionsprodukt des Verfahrens nach einem der Ansprüche 1 bis 6.

9. Verfahren zum Bereitstellen eines Oberflächeneffekts auf einem faserigen Substrat, umfassend In-Kontakt-Bringen eines faserigen Substrats mit dem Reaktionsprodukt des Verfahrens nach einem der Ansprüche 1 bis 6, wobei der Oberflächeneffekt Fleckenentfernung ist,
wobei das faserige Substrat aus Fasern, Garnen, Geweben, Gewebemischungen, Textilien, Vliesstoffen, Papier, Leder und Teppichen ausgewählt ist.

10. Faseriges Substrat, das nach dem Verfahren nach Anspruch 9 behandelt wurde.

## Revendications

1. Procédé de préparation d'un composé, comprenant :
(i) le fait de faire réagir (a) au moins un composé contenant un groupe isocyanate choisi parmi les homopolymères d'hexaméthylène diisocyanate, l'isocyanate de 3-isocyanatométhyl-3,4,4-triméthylcyclohexyle, le bis-(4-isocyanatocyclohexyl)méthane et les trimères de diisocyanate de formules (IIIa), (IIIb), (IIIc), (Illd) et (Ille) : 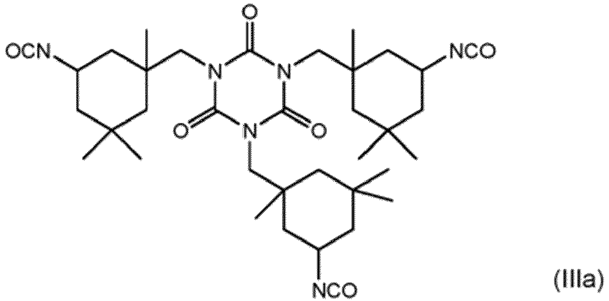 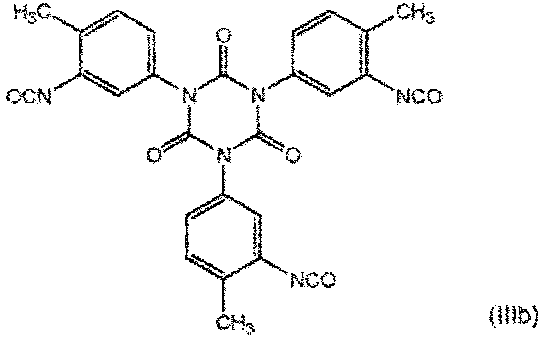 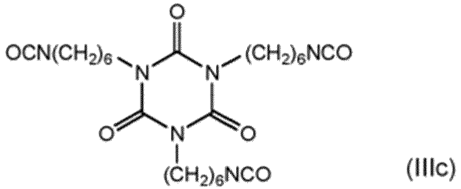 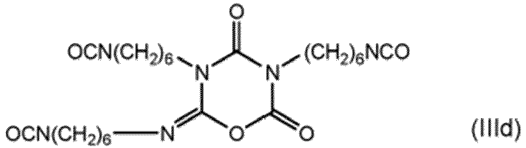 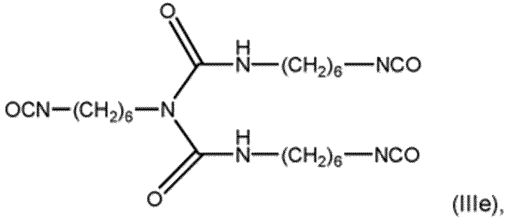
ou un mélange de ceux-ci ;
(b) au moins un composé réactif à l'isocyanate choisi parmi le groupe constitué d'un alcool fluoré présentant la formule (I)
R_{f}-A-OH (I),
dans lequel R_{f} est un groupe perfluoroalkyle en C₁ à C₂₀ éventuellement interrompu par CH₂, CH₂CH₂, SO₂N, CFH, S ou O ; et
A est une liaison directe ou un groupe alkylène en C₁ à C₆ ; ou
un alcool de sucre cyclique ou acyclique choisi parmi les formules (IIa), (IIb) ou (IIc) : 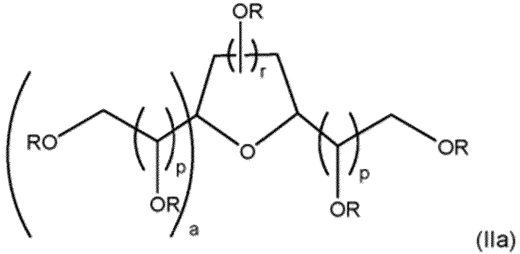 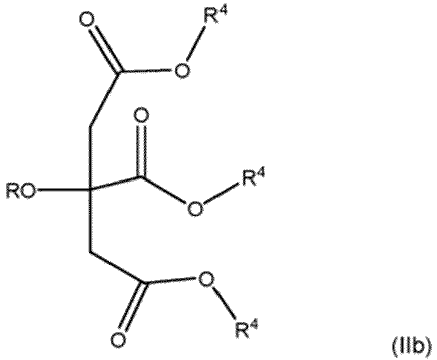 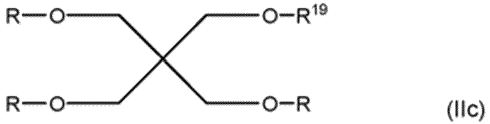
dans lequel chaque R est indépendamment -H ; -R¹ ; -C(O)R¹ ; -(CH₂CH₂O)ₙ(CH(CH₃)CH₂O)ₘR² ; ou -(CH₂CH₂O)ₙ(CH(CH₃)CH₂O)ₘC(O)R¹ ;
chaque n est indépendamment de 0 à 20 ;
chaque m est indépendamment de 0 à 20 ;
m+n est supérieur à 0 ;
r est de 1 à 3 ;
a est 0 ou 1 ;
p est indépendamment de 0 à 2 ;
à condition que a soit 0 lorsque r est 3 ;
chaque R¹ est indépendamment un groupe alkyle linéaire ou ramifié présentant de 5 à 29 atomes de carbone comprenant éventuellement au moins 1 liaison insaturée ;
chaque R² est indépendamment -H, ou un groupe alkyle linéaire ou ramifié présentant de 6 à 30 atomes de carbone comprenant éventuellement au moins 1 liaison insaturée ;
ou des mélanges de ceux-ci ;
si la formule (IIa) est choisie, alors au moins un R est -H et au moins un R est -R¹ ; -C(O)R¹ ; - (CH₂CH₂O)ₙ(CH(CH₃)CH₂O)ₘR² ; ou -(CH₂CH₂O)ₙ(CH(CH₃)CH₂O)ₘC(O)R¹ ;
chaque R⁴ est indépendamment -H, un groupe alkyle linéaire ou ramifié présentant de 6 à 30 atomes de carbone comprenant éventuellement au moins 1 liaison insaturée, ou des combinaisons de ceux-ci ; groupes ; -(CH₂CH₂O)ₙ(CH(CH₃)CH₂O)ₘR² ; ou -(CH₂CH₂O)ₙ(CH(CH₃)CH₂O)ₘC(O)R¹ ;
si la formule (IIb) est choisie, au moins un R ou R⁴ est -H ; et au moins un R ou R⁴ est un groupe alkyle linéaire ou ramifié comprenant éventuellement au moins une liaison insaturée, ou des combinaisons de ceux-ci ; -(CH₂CH₂O)ₙ(CH(CH₃)CH₂O)ₘR² ;
ou -(CH₂CH₂O)ₙ(CH(CH₃)CH₂O)ₘC(O)R¹ ; et
chaque R¹⁹ est -H, -C(O)R¹, ou -CH₂C[CH₂OR]₃, si la formule (IIc) est choisie, au moins un R¹⁹ ou R est -H ; et au moins un R¹⁹ ou R est -C(O)R¹, -(CH₂CH₂O)ₙ(CH(CH₃)CH₂O)ₘR² ; ou - (CH₂CH₂O)ₙ(CH(CH₃)CH₂O)ₘC(O)R¹ ;
- ou des mélanges de ceux-ci :
(c) au moins un composé éthyléniquement insaturé réactif aux isocyanates choisi parmi les composés hydroxyalkylvinyliques, les polyétheralcools allyliques ou méthallyliques, les composés aminoalkylvinyliques, les alcools alkyliques acryliques ou méthacryliques, les polyétheralcools acryliques ou méthacryliques ou les amines acryliques ou méthacryliques ; et
(e) éventuellement au moins un composé réactif à l'isocyanate supplémentaire choisi parmi l'eau, les composés organiques de formule (IVa)
R⁵-D (IVa),
ou
les composés organiques de formule (IVb)
R³-(OCH₂CH(OR³)CH₂)_{z}-OR³ (IVb),
ou des mélanges de ceux-ci, dans lequel
R⁵ est choisi parmi un alkyle linéaire ou ramifié en -C₁ à C₃₀ comprenant éventuellement au moins un groupe insaturé, un alkyle linéaire ou ramifié en C₁ à C₃₀ à fonction hydroxyle, un polyéther linéaire ou ramifié en C₁ à C₃₀ à fonction hydroxyle, un polyester linéaire ou ramifié à fonction hydroxyle présentant un squelette polymère de polyester, un organosiloxane linéaire ou ramifié à fonction hydroxyle, un organosiloxane linéaire ou ramifié à fonction amine, un alkyle linéaire ou ramifié en C₁ à C₃₀ à fonction thiol, un alkyle linéaire ou ramifié en C₁ à C₃₀ à fonction amine, 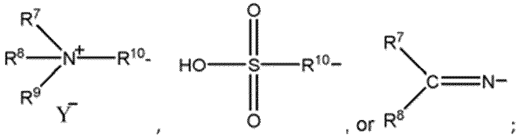
D est choisi parmi -N(R¹²)H, -OH, -COOH, -SH, -O-(CH₂CH₂O)ₛ(CH(CH₃CH₂O)ₜ-H, ou (C(O)-O-(CH₂CH₂O)ₛ(CH(CH₃)CH₂O)ₜH ;
R³ est choisi indépendamment parmi -H ; -R¹⁸; ou -C(O)R¹⁸, à condition qu'au moins un R³ soit - H ;
R¹² est -H ou un groupe alkyle monovalent C₁ à C₆ ;
R⁷, R⁸, et R⁹ sont chacun indépendamment, -H, alkyle en -C₁ à C₆, ou des combinaisons de ceux-ci ;
R¹⁰ est un groupe alkyle divalent de 1 à 20 atomes de carbone ;
R¹⁸ est indépendamment un groupe alkyle linéaire ou ramifié présentant de 5 à 29 atomes de carbone comprenant éventuellement au moins 1 liaison insaturée ;
z est de 1 à 15 ;
Y est Cl ;
s est un entier de 0 à 50 ;
t est un entier de 0 à 50 ; et
s+t est supérieur à 0 ;
et
(ii) le fait de faire réagir le produit de réaction de l'étape (i) avec (d) une source de bisulfite choisie parmi un sel de métabisulfite, un sel de bisulfite ou un mélange de SO₂ et de base en présence d'un initiateur radicalaire ;
dans lequel le ou les composés réactifs à l'isocyanate (b) sont de 15 à 70 % en moles du total des réactifs réagissant à l'isocyanate utilisés pour former le composé, le composé éthyléniquement insaturé réactif à l'isocyanate (c) est de 10 à 70 % en moles du total des réactifs réagissant à l'isocyanate, et le composé réactif à l'isocyanate supplémentaire (e) est de 0 à 70 % en moles du total des réactifs réagissant à l'isocyanate.

2. Procédé selon la revendication 1, dans lequel le composé réactif à l'isocyanate (b) est choisi parmi les formules (IIa), (IIb) ou (IIc).

3. Procédé selon la revendication 1, dans lequel le composé réactif à l'isocyanate (b) est un alcool fluoré présentant la formule (I).

4. Procédé selon la revendication 1, dans lequel le diisocyanate ou le polyisocyanate est choisi parmi les formules (IIIa), (IIIb), (IIIc), (IIId) et (Ille).

5. Procédé selon la revendication 2, dans lequel le composé réactif à l'isocyanate (b) est choisi parmi la formule (IIa) pour être la formule (IIa') : 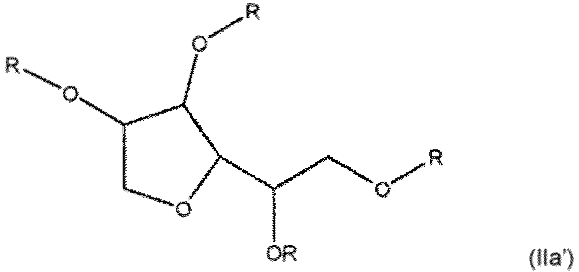 dans lequel au moins un R est -H et au moins un R est -R¹ ; ou -C(O)R¹.

6. Procédé selon la revendication 2, dans lequel le composé réactif à l'isocyanate (b) est choisi parmi la formule (IIa) pour être la formule (IIa') : 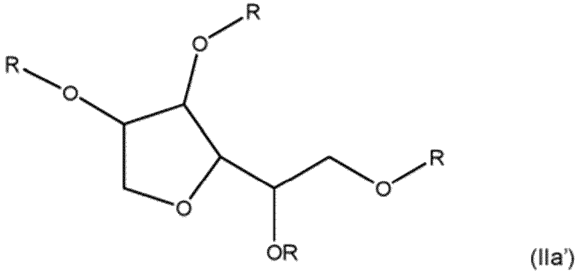
dans lequel R est en outre limité à -H indépendamment ;
-(CH₂CH₂O)ₙ(CH(CH₃)CH₂O)ₘR² ; ou
-(CH₂CH₂O)ₙ(CH(CH₃)CH₂O)ₘC(O)R¹ ; dans lequel
au moins un R est indépendamment -(CH₂CH₂O)ₙ(CH(CH₃)CH₂O)ₘR²
ou -(CH₂CH₂O)ₙ(CH(CH₃)CH₂O)ₘC(O)R¹.

7. Composition aqueuse comprenant le produit de réaction du procédé selon la revendication 1.

8. Procédé de réduction de la tension superficielle d'un milieu aqueux comprenant la mise en contact du milieu aqueux avec le produit de réaction du procédé selon l'une quelconque des revendications 1 à 6.

9. Procédé permettant de conférer un effet de surface à un substrat fibreux, comprenant la mise en contact d'un substrat fibreux avec le produit de réaction du procédé selon l'une quelconque des revendications 1 à 6, dans lequel l'effet de surface est détachant,
dans lequel le substrat fibreux est choisi parmi les fibres, les fils, les tissus, les mélanges de tissus, les textiles, les non-tissés, le papier, le cuir et les tapis.

10. Substrat fibreux qui a été traité par le procédé selon la revendication 9.
